(19) Europäisches Patentamt
European Patent Office
Office européen des brevets

(11) Veröffentlichungsnummer: **0 559 072 A2**

(12) # EUROPÄISCHE PATENTANMELDUNG

(21) Anmeldenummer: **93102915.1**

(51) Int. Cl.[5]: **C08L 67/02**, C08G 63/52

(22) Anmeldetag: **25.02.93**

(30) Priorität: **05.03.92 DE 4206950**

(43) Veröffentlichungstag der Anmeldung: **08.09.93 Patentblatt 93/36**

(84) Benannte Vertragsstaaten: **BE DE FR GB**

(71) Anmelder: **BASF Aktiengesellschaft**
**Carl-Bosch-Strasse 38**
**D-67063 Ludwigshafen(DE)**

(72) Erfinder: **Bright, Theresa, Anne, Dr.**
**Stephanienufer 19**
**W-6800 Mannheim 1(DE)**
Erfinder: **Goetz, Walter, Dr.**
**Dhauner Strasse 79**
**W-6700 Ludwigshafen(DE)**
Erfinder: **Plachetta, Christoph, Dr.**
**Danziger Strasse 1**
**W-6703 Limburgerhof(DE)**
Erfinder: **Deckers, Andreas, Dr.**
**Eschenbachstrasse 48**
**W-6700 Ludwigshafen(DE)**

(54) **Aus Polyesterformmassen erhältliche Formkörper und flächige Gebilde.**

(57) Formkörper oder flächige Gebilde, die dadurch erhältlich sind, daß man Polyesterformmassen, enthaltend als wesentliche Komponenten

A) einen teilkristallinen Polyester auf der Basis von

$A_1$) mindestens einem polyesterbildenden Monomeren, welches mindestens eine olefinische Doppelbindung in der Hauptkette enthält (Monomeres $A_1$), wobei die olefinische Doppelbindungen nicht konjugiert zu den Carboxylgruppen stehen

und

$A_2$) mindestens einem polyesterbildenden Monomeren, welches keine olefinischen Doppelbindungen enthält (Monomeres $A_2$)

oder

B) einer Polyestermischung, enthaltend als Komponenten

$B_1$) einen olefinische Doppelbindungen enthaltenden kristallinen Polyester auf der Basis von mindestens einem Monomeren ($A_1$) und mindestens einem Monomeren ($A_2$)

und

$B_2$) einen Polyester, welcher keine olefinischen Doppelbindungen in der Hauptkette enthält und auf der Umsetzung polyesterbildender Monomerer ($A_2$) basiert

sowie darüber hinaus

schlagzähmodifizierenden Kautschuk, Füllstoffe, Verstärkungsmittel, Flammschutzmittel, Synergisten, Zusatzstoffe und/oder Verarbeitungshilfsmittel

nach der Formgebung Beta-, Gamma-, Röntgen- oder Elektronenstrahlung aussetzt.

EP 0 559 072 A2

Die vorliegende Erfindung betrifft Formkörper oder flächige Gebilde, die dadurch erhältlich sind, daß man Polyesterformmassen, enthaltend als wesentliche Komponenten

I 40 bis 100 Gew.-%, bezogen auf das Gesamtgewicht der Polyesterformmassen,

A) eines teilkristallinen Polyesters mit einem Kristallisationsgrad ≧ 10 % (Polyester A) auf der Basis von

$A_1$) 1 bis 40 Gew.-%, bezogen auf das Gesamtgewicht des Polyesters (A), mindestens eines Monomeren, welches mindestens eine olefinische Doppelbindung in der Hauptkette enthält (Monomeres $A_1$) ausgewählt aus der Gruppe der olefinisch ungesättigten polyesterbildenden Diole, Dicarbonsäuren und Dicarbonsäurederivate, wobei die olefinische Doppelbindungen nicht konjugiert zu den Carboxylgruppen stehen

und

$A_2$) 60 bis 99 Gew.-%, bezogen auf das Gesamtgewicht des Polyesters (A), mindestens eines Monomeren, welches keine olefinischen Doppelbindungen enthält (Monomeres $A_2$), ausgewählt aus der Gruppe der polyesterbildenden Diole, Dicarbonsäuren und Dicarbonsäureester

oder

B) einer Polyestermischung mit einem Kristallinitätsgrad ≧ 10 %, enthaltend als Komponenten

$B_1$) 5 bis 40 Gew.-%, bezogen auf das Gesamtgewicht der Polyestermischung, eines olefinische Doppelbindungen enthaltenden kristallinen Polyesters (Polyester $B_1$) auf der Basis von

$B_{1.1)}$ 45 bis 100 Mol-%, bezogen auf den Polyester ($B_1$), mindestens eines Monomeren ($A_1$) und

$B_{1.2)}$ 0 bis 55 Mol-%, bezogen auf den Polyester ($B_1$), mindestens eines Monomeren ($A_2$)

und

$B_2$) 60 bis 95 Gew.-%, bezogen auf das Gesamtgewicht der Polyestermischung eines Polyesters, welcher keine olefinischen Doppelbindungen in der Hauptkette enthält (Polyester $B_2$) und auf der Umsetzung polyesterbildender Monomerer ($A_2$) basiert

und

II) 0 bis 35 Gew.-%, bezogen auf das Gesamtgewicht der Polyesterformmassen, eines schlagzähmodifizierenden Kautschuks und

III) 0 bis 50 Gew.-%, bezogen auf das Gesamtgewicht der Polyesterformmassen, Füllstoffe und/oder Verstärkungsmittel und

IV) 0 bis 30 Gew.-%, bezogen auf das Gesamtgewicht der Polyesterformmassen, eines Flammschutzmittels und

V) 0 bis 20 Gew.-%, bezogen auf das Gesamtgewicht der Polyesterformmassen, eines Synergisten und

VI) 0 bis 5 Gew.-%, bezogen auf das Gesamtgewicht der Polyesterformmassen, an Zusatzstoffen und/oder Verarbeitungshilfsmitteln

nach der Formgebung Beta-, Gamma-, Röntgen- oder Elektronenstrahlung aussetzt.

Weiterhin betrifft die Erfindung ein Verfahren zur Herstellung dieser Formörper oder flächigen Gebilde sowie deren Verwendung.

Polyester, die teilweise aus olefinisch ungesättigten Monomeren aufgebaut sind, sind an sich bekannt. Dabei können sich die olefinischen Doppelbindungen sowohl in der Seitenkette (siehe DE-A1-23 48 841) als auch in der Hauptkette (siehe z.B. DE-A1-25 09 790, DE-A 16 94 216) des Polymeren befinden.

Ferner ist bekannt, Überzüge, die die in der DE-A1-23 48 841 beschriebenen Polyester mit vinylischen Seitenketten enthalten, durch hochenergetische Strahlung auszuhärten. Aufgrund ihrer Struktur sind diese Polyester vor dem Vernetzen klebrig und weich, so daß sie sich nicht spritzgießen lassen. Nach dem Bestrahlen werden Materialien erhalten, die für viele Anwendungszwecke zu spröde sind.

Nach der japanischen Auslegeschrift JP-B4-61020570 können Formmassen auf der Basis einer Polyestermischung aus einem Polyester, der keine olefinischen Doppelbindungen enthält und einen olefinisch ungesättigten Polyester mit UV-Strahlen vernetzt werden. Die so hergestellten Produkte verformen sich jedoch bei hoher thermischer Beanspruchung.

Der vorliegenden Erfindung lag daher die Aufgabe zugrunde, Formkörper und flächige Gebildete zur Verfügung zu stellen, die auf einfache Weise erhältlich sind und ein gutes Eigenschaftsspektrum, insbesondere eine hohe Wärmeformbeständigkeit, aufweisen.

Demzufolge wurden die eingangs definierten Formkörper und flächigen Gebilde erhalten.

Die erfindungsgemäßen Formkörper und flächigen Gebilde sind dadurch erhältlich, daß man Polyesterformmassen nach der Formgebung Beta-, Gamma-, Röntgen- oder Elektronenstrahlung aussetzt.

Diese Polyesterformmassen enthalten als Komponente (I) 40 bis 100 Gew. -%, vorzugsweise 60 bis 100 Gew.-%, bezogen auf das Gesamtgewicht der Polyesterformmasse, eines teilkristallinen Polyesters (Polyester (A)) oder einer Polyestermischung (Komponente (B)).

Die Polyester (A) weisen einen Kristallinitätsgrad von 10 % oder höher auf. Vorzugsweise liegt der Kristallinitätsgrad bei mindestens 25 %. Im allgemeinen beträgt der Kristallinitätsgrad nicht mehr als 60 %, obwohl er auch höhere Werte annehmen kann.

Die Polyester (A) können dadurch hergestellt werden, daß man 1 bis 40 Gern. -%, bevorzugt 2 bis 20 Gew . -%, besonders bevorzugt 5 bis 15 Gew.-%, bezogen auf das Gesamtgewicht des Polyesters (A), mindestens eines Monomeren, welches mindestens eine olefinische Doppelbindung in der Hauptkette enthält (Monomeres ($A_1$)) mit 60 bis 99 Gew.-%, vorzugsweise 80 bis 98 Gew.-%, insbesondere 85 bis 95 Gew.-%, bezogen auf das Gesamtgewicht des Polyesters (A), mindestens eines Monomeren, welches keine olefinischen Doppelbindungen in der Hauptkette enthält (Monomeres ($A_2$)) umsetzt.

Die Monomeren ($A_1$) enthalten mindestens eine und vorzugsweise nicht mehr als drei olefinische Doppelbindungen in der Hauptkette. Es ist jedoch auch möglich, Verbindungen mit mehr als drei z.B. bis zu fünf Doppelbindungen in der Hauptkette als Monomere ($A_1$) einzusetzen. Diese stehen vorzugsweise nicht konjugiert zueinander. Neben den olefinischen Doppelbindungen können davon isoliert stehende aromatische Ringe vorhanden sein. Außerdem stehen die olefinischen Doppelbindungen nicht in $\alpha$, $\beta$-Stellung zu einer Carbonylfunktion.

Als Monomere ($A_1$) kommen polyesterbildende in der Hauptkette olefinisch ungesättigte Diole in Betracht. Diese weisen im allgemeinen 4 bis 30 Kohlenstoffatome auf. Bevorzugt werden Diole mit 6 bis 30 Kohlenstoffatomen, insbesondere solche mit 8 bis 30 Kohlenstoffatomen. Ganz besonders bevorzugt werden langkettige Diole mit 10 bis 30 Kohlenstoffatomen. Diese Diole können linear oder verzweigt sein und sowohl cycloaliphatische als auch aromatische Ringe enthalten. Bevorzugt werden aliphatische Diole linearer Struktur. Beispiele geeigneter Diole sind 2-Hexen-1,6-diol, 3-Hexen-1,6-diol, 3-Octen-1,8-diol und 4-Octen-1,8-diol. Zu den langkettigen Diolen zählen 9-Octadecen-1,18-diol, 9-Nonadecen-1,19-diol, 10-Eicosen-1,20-diol, 9,12-Heneicosadien-1,21-diol, 9,12-Docasadien-1,22-diol, 9,12,15-Tetracosatrien-1,24-diol, 9,12,15-Pentacosatrien-1,25-diol und 9,12,15,18-Heptacosatetraen-1,27-diol. Bevorzugt werden 3-Hexen-1,6-diol und 4-Octen-1,8-diol eingesetzt. Ganz besonders bevorzugt wird 10-Eicosen-1,20-diol verwendet. Es können sowohl einzelne Verbindungen als auch Mischungen verschiedener Diole eingesetzt werden.

Erfindungsgemäß können auch olefinisch ungesättigte Dicarbonsäuren oder deren Derivate als Monomere ($A_1$) eingesetzt werden. Bei den Dicarbonsäurederivaten werden als Dicarbonsäuredialkylester, insbesondere die Dicarbonsäuredimethylester, bevorzugt. In der Regel haben die Dicarbonsäuren bzw. deren Derivate 6 bis 30 und insbesondere 10 bis 30 Kohlenstoffatome. Ganz besonders bevorzugt werden Verbindungen mit 16 bis 30 Kohlenstoffatomen. Die Dicarbonsäuren und Dicarbonsäurederivate können linear oder verzweigt sein und sowohl cycloaliphatische als auch aromatische Ringe enthalten. Bevorzugt werden aliphatische lineare Dicarbonsäuren bzw. deren Derivate verwendet. Beispiele geeigneter Verbindungen sind 3-Hexen-1,6-dicarbonsäure, 3-Octen-1,8-dicarbonsäuredimethylester. Vertreter der langkettigen Dicarbonsäuren und Dicarbonsäurederivate sind 9-Octadecen-1,18-dicarbonsäure, 9-Nonadecen-1,19-dicarbonsäure, 10-Eicosen-1,20-dicarbonsäure, 10-Eicosen-1,20-dicarbonsäuredimethylester, 9,12-Heneicosadien-1,21-dicarbonsäure, 9,12-Docasadien-1,22-dicarbonsäure, 9,12-Tetracosadien-1,24-dicarbonsäure, 9,12-Tetracosadien-1,24-dicarbonsäuredimethylester, 9,12,15-Tetracosatrien-1,24-dicarbonsäure, 9,12,15-Pentacosatrien-1,25-dicarbonsäure, 9,12,15-Pentacosatrien-1,25-dicarbonsäuredimethylester und 9,12,15,18-Heptacosatetraen-1,27-dicarbonsäure. Bevorzugt werden 3-Hexen-1,6-dicarbonsäure, 3-Hexen-1,6-dicarbonsäuredimethylester, 4-Octen-1,8-dicarbonsäure und 4-Octen-1,8-dicarbonsäuredimethylester eingesetzt. Ganz besonders bevorzugt werden 10-Eicosen-1,20-dicarbonsäure und 10-Eicosen-1,20-dicarbonsäuredimethylester verwendet. Neben Einzelverbindungen können auch Mischungen unterschiedlicher Dicarbonsäuren oder deren Derivate eingesetzt werden.

Die langkettigen olefinisch ungesättigten Diole, Dicarbonsäuren und Dicarbonsäurederivate sind beispielsweise durch Metathesereaktionen aus langkettigen Säuren wie Ölsäure oder Ricinolsäure bzw. deren Methylestern zugänglich. Daneben können auch Säure-Gemische wie Gemische aus Öl- und Ricinolsäure oder Gemische aus Öl-Linol- und Linolensäure der Metathesereaktion unterworfen werden, um die entsprechenden langkettigen Monomere ($A_1$) herzustellen.

Die Monomere ($A_2$) sind polyesterbildende Verbindungen, die keine olefinischen Doppelbindungen aufweisen. Sie können jedoch einen oder mehrere aromatische oder cycloaliphatische Ringe enthalten, die auch substituiert sein können.

Die als Monomere ($A_2$) in Betracht kommenden Diole, die keine olefinische Doppelbindung enthalten, weisen in der Regel 2 bis 10 Kohlenstoffatome auf und können sowohl linear als auch verzweigt sein. Zu dieser Gruppe von Diolen zählen Ethylenglykol, 1,3-Propandiol, 1,4-Butandiol, 1,4-Hexandiol, 1,6-Hexandiol, 1,4-Cyclohexandiol, 1,4-Di-(hydroxymethyl)cyclohexan, 2,2-Bis(4,4'-diphenylhydroxy)propan (Bisphenol A) und Neopentylglykol. Besonders bevorzugte Diole sind Ethylenglykol und 1,4-Butandiol. Neben Einzelverbindungen können auch Mischungen unterschiedlicher Diole sowie esterbildende Derivate derselben eingesetzt werden.

Zu den polyesterbildenden Verbindungen, die als Monomere ($A_2$) verwendet werden können, zählen auch aromatische sowie aliphatische Dicarbonsäuren und deren Derivate, die keine olefinische Doppelbindung enthalten. Bevorzugte Dicarbonsäurederivate sind die Dicarbonsäuredialkylester, insbesondere die Dimethylester. Die aromatischen Dicarbonsäuren bzw. deren Derivate haben vorzugsweise 8 bis 16 Kohlenstoffatome und sind beispielsweise Isophthalsäure, Terephthalsäure, substituierte Isophthalsäuren und Terephthalsäuren wie 3-t-Butylisophthalsäure oder Phenoxyterephthalsäure, mehrkernige Dicarbonsäuren, z.B. 4,4'-Diphenyldicarbonsäure, 3,3'-Diphenyldicarbonsäure, 3,3'-Diphenylmethandicarbonsäure, 4,4'-Diphenylmethandicarbonsäure, 3,3'-Diphenylsulfondicarbonsäure, 4,4'-Diphenylsulfondicarbonsäure, 1,4-Naphthalindicarbonsäure, 2,6-Naphthalindicarbonsäure, wobei Terephthalsäure besonders bevorzugt ist. Vertreter der aliphatischen Dicarbonsäuren, die in der Regel 4 bis 20 Kohlenstoffatome, vorteilhafterweise 4 bis 16 Kohlenstoffatome aufweisen, sind Adipinsäure, Suberinsäure, Azelainsäure, Sebacinsäure und 1,12-Dodecansäure. Es können auch Mischungen dieser Dicarbonsäuren bzw. deren esterbildenden Derivate eingesetzt werden.

Die Herstellung des teilkristallinen Polyesters (A) erfolgt im allgemeinen in an sich bekannter Weise durch Reaktion der Carbonsäurefunktionen mit den Hydroxyfunktionen.

Gemäß der Erfindung kann die in den Polyesterformmassen enthaltende Komponente (I) auch eine Mischung verschiedener Polyester mit einem Kristallisationsgrad von 10 % oder mehr sein. (Komponente (B)). Vorzugsweise beträgt der Kristallisationsgrad der Polyestermischung (B) mindestens 25 %. Im allgemeinen überschreitet der Kristallisationsgrad nicht Werte größer als etwa 50 %.

Diese Polyestermischung kann 5 bis 40 Gew.-%, vorzugsweise 8 bis 20 Gew.-%, insbesondere 8 bis 15 Gew.-%, bezogen auf das Gesamtgewicht der Polyestermischung eines olefinische Doppelbindungen enthaltenden Polyesters (Polyester ($B_1$)) enthalten.

Die Polyester ($B_1$) basieren auf der Umsetzung von 45 bis 100 Mol-%, bevorzugt 45 bis 55 Mol-% bezogen auf den Polyester ($B_1$), mindestens eines Monomeren ($A_1$), und 0 bis 55 Mol-%, bevorzugt 0 bis 50 Mol-%, bezogen auf den Polyester ($B_1$), mindestens eines Monomeren ($A_2$). Unter dem Polyester ($B_1$) sind auch Mischungen unterschiedlicher derartiger olefinisch ungesättigter Polyester zu verstehen. Besonders bevorzugt sind Polyester ($B_1$), deren Diolkomponente oder Dicarbonsäurekomponente aus 100 Mol-% aus ungesättigten Monomeren ($A_1$) aufgebaut ist.

Die Herstellung der Polyester ($A_1$) entspricht der der Polyester (A), wie oben ausgeführt.

Die Polyestermischung (Komponente (B)) enthält erfindungsgemäß 60 bis 95 Gew.-%, bezogen auf das Gesamtgewicht der Polyestermischung eines Polyesters, welcher keine olefinischen Doppelbindungen enthält (Polyester ($B_2$)). Bevorzugt enthält die Polyestermischung 80 bis 92 Gew.-%, insbesondere 85 bis 92 Gew.-% des Polyesters ($B_2$).

Die Polyester ($B_2$) basieren auf der Umsetzung polyesterbildender Monomerer ($A_2$). Die Polyester ($B_2$) schließen auch Mischungen unterschiedlicher Polyester dieses Typs ein.

Die Herstellung der Polyester ($B_2$) kann durch Reaktion von den bereits als Monomere ($A_2$) beschriebenen Dicarbonsäuren, deren Estern oder anderer esterbildender Derivate mit Diolen oder deren esterbildenden Derivaten in an sich bekannter Weise erfolgen.

Die Polyesterformmassen können darüber hinaus 0 bis 35 Gew.-%, bevorzugt 10 bis 30 Gew.-%, besonders bevorzugt 15 bis 20 Gew.-%, bezogen auf das Gesamtgewicht der Polyesterformmassen, eines schlagzähmodifizierenden Kautschuks enthalten (Komponente (II)).

Als Komponente (II) kommen sowohl Pfropfpolymerisate (II/1) als auch Copolymerisate (II/2) in Betracht. Daneben können auch Mischungen dieser Pfropfpolymerisate und Copolymerisate verwendet werden.

Bevorzugte Pfropfpolymerisate (II/1) sind aufgebaut aus

a) 30 bis 90 Gew.-%, vorzugsweise 40 bis 80 Gew.-% einer Pfropfgrundlage aus einem kautschukelastischen Polymeren mit einer Glasübergangstemperatur von unter 0 °C

b) 10 bis 70 Gew.-%, vorzugsweise 20 bis 60 Gew.-% einer Pfropfauflage aus

$b_1$) 50 bis 90, vorzugsweise 60 bis 80 Gew.-% Styrol oder substituierten Styrolen oder deren Mischungen

$b_2$) 10 bis 50, vorzugsweise 20 bis 40 Gew.-% Acrylnitril oder Methacrylnitril oder deren Mischungen und

$b_3$) 0 bis 30, vorzugsrneise bis zu 20 Gew.-% eines polymerisierbaren Monomeren mit Carboxyl-, Carboxylderivat-, Hydroxyloder Epoxygruppen.

Für die Pfropfgrundlage (a) kommen Polymerisate in Frage, deren Glasübergangstemperatur unterhalb von 0 °C, vorzugsweise unterhalb von -20 °C liegt.

Dies sind z.B. Naturkautschuk, Synthesekautschuke auf der Basis von konjugierten Dienen. Diese können mit anderen Copolymeren sowie Elastomeren auf der Basis von $C_1$- bis $C_8$-Alkylestern der

Acrylsäure oder Methacrylsäure, die ebenfalls weitere Comonomere enthalten können, gemischt sein.

Elastomere des letztgenannten Typs werden vorzugsweise vernetzt, was durch Mitverwendung von mindestens difunktionellen Monomeren erfolgen kann, die vorzugsweise zur Copolymerisation befähigte ethylenische Doppelbindungen enthalten.

Beispielsweise seien Divinylbenzol, Diallylmaleat, Diallylfumarat, Diallylphthalat, Triallylcyanurat, Triallylisocyanurat, Tricyclodecenylacrylat, Butandioldiacrylat, Butadien und Dihydrodicyclopentadienylacrylat genannt. Der Anteil an solchen Monomeren, nachstehend bei der Beschreibung der bevorzugten Pfropfgrundlagen mit ($a_2$) bzw. ($a_5$) bezeichnet, beträgt im allgemeinen 0,1 bis 5, vorzugsweise 0,5 bis 4 Gew.-%, bezogen auf die Gesamtmenge der Monomeren für die Pfropfgrundlage.

Weitere Beispiele einer Pfropfgrundlage (a) sind Ethylen/Propylen (EP) oder Ethylen-Propylen-Dien Kautschuke (EPDM). Die vorzugsweise in Betracht kommenden Ethylen/Propylen- oder Ethylen-Propylen-Dien-Kautschuke sind kommerziell erhältlich. Daneben können auch Silikon-kautschuke verwendet werden, wie sie in der EP-A-231 776 beschrieben werden.

Nachstehend werden zwei besonders bevorzugte Arten von Pfropfgrundlagen beschrieben.

Zum einen sind dies Pfropfgrundlagen aus

$a_1$) 95 bis 99,9 Gew.-% eines $C_1$- bis $C_8$-Alkylesters der Acrylsäure oder Methacrylsäure oder deren Mischungen, insbesondere n-Butylacrylat und/oder 2-Ethylhexylacrylat, und

$a_2$) 0,1 bis 5 Gew.-% eines difunktionellen Monomeren, vorzugsweise Dihydrodicyclopentadienylacrylat oder Tricyclodecenylacrylat oder deren Mischungen.

Eine andere bevorzugte Gruppe sind Pfropfgrundlagen auf der Basis von

$a_3$) 50 bis 100 Gew.-% eines konjugierten Diens, vorzugsweise Butadien-1,3,

$a_4$) 0 bis 50 Gew.-% Styrol, Acrylnitril, Methacrylnitril und/oder $C_1$-bis $C_8$-Alkylestern der Acrylsäure oder Methacrylsäure und

$a_5$) 0 bis 5 Gew.-% eines vernetzenden Monomeren.

Pfropfgrundlagen der beiden vorgenannten Arten sind an sich bekannt und in der Literatur beschrieben, beispielsweise in der DE-PS 24 44 584, der DE-PS 12 60 135 und der EP-A-1245.

Auf die Pfropfgrundlage (a) ist eine Pfropfauflage (b) aufgepfropft, die durch Polymerisation von ($b_1$), ($b_2$) und ($b_3$) erhältlich ist.

Beispiele für substituierte Styrole sind $\alpha$-Methylstyrol, p-Methylstyrol, p-Chlorstyrol und p-Chlor-$\alpha$-Methylstyrol, wovon Styrol und $\alpha$-Methylstyrol bevorzugt werden.

Die Pfropfauflage (b) kann in einem oder in mehreren, z.B. zwei oder drei, Verfahrensschritten hergestellt werden; die Bruttozusammensetzung bleibt davon unberührt.

Falls Monomere ($b_3$) vorhanden sind, beträgt deren Anteil an der Pfropfhülle (b) bis zu 30, vorzugsweise 0,2 bis 20 und insbesondere 0,5 bis 10 Gew.-%, bezogen auf das Gesamtgewicht von (b).

Beispiele für Monomere ($b_3$) sind Methacrylsäureglycidylester, Acrylsäureglycidylester, Allylglycidylether, Vinylglycidylether und Itaconsäureglycidylester, sowie Acrylsäure, Methacrylsäure und ihre Metall-, insbesondere Alkalimetallsalze und Ammoniumsalze, Maleinsäure, Maleinsäureanhydrid, Metallsalze des sauren Monoethylesters der Maleinsäure, Fumarsäure, Fumarsäuremonoethylester, Itaconsäure, Vinylbenzoesäure, Vinylphthalsäure, Salze von Fumarsäuremonoethylester, Monoester von Maleinsäure, Fumarsäure, Acrylsäure, Methacrylsäure und Itaconsäure mit Alkoholen ROH, wobei R bis zu 29 Kohlenstoffatomen aufweist, z.B. Methyl, Propyl, Isopropyl, Butyl, Isobutyl, Hexyl, Cyclohexyl, Octyl, 2-Ethylhexyl, Decyl, Stearyl, Methoxyethyl, Ethoxyethyl und Hydroxyethyl.

Maleinsäureanhydrid und Metallsalze (insbesondere Alkalimetall- und Erdalkalimetallsalze) von polymerisierbaren Carbonsäuren weisen zwar keine freien Carboxylgruppen auf, kommen aber in ihrem Verhalten den freien Säuren nahe, so daß sie hier von dem Oberbegriff carboxylgruppenhaltige Monomere mit umfaßt werden sollen.

Als zweite Gruppe von Monomeren ($b_3$) sind Lactamgruppen enthaltende Monomere geeignet. Vorzugsweise sind die Lactamgruppen wie in der Formel 1

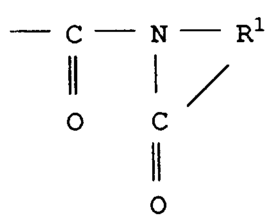

1

wobei $R^1$ für eine verzweigte oder lineare Alkylengruppe mit 2 bis 15 C-Atomen steht, über eine Carbonylgruppe am Stickstoff in die entsprechenden Monomeren eingebaut.

Nur stellvertretend seien hier β-Propiolactamgruppen (Azetidin-2-on-gruppen) der allgemeinen Formel 2

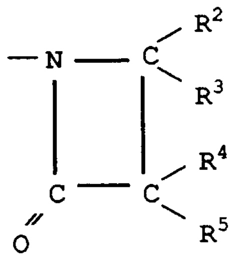

2

wobei die Substituenten $R^2$ bis $R^5$ eine Alkylgruppe mit 1 bis 6 C-Atomen oder ein Wasserstoffatom sein können, genannt. Diese werden von R. Graf in Angew. Chem. 74 (1962), 523-530 und H. Bastian in Angew. Chem. 80 (1968), 304-312 beschrieben. Ein Beispiel hierfür ist die 3,3'-Dimethyl-3-propiolactamgruppe.

Weitere geeignete Lactamgruppen sind solche die sich von ε-Caprolactam,2-Pyrrolidon, 7-Önantholactam, 8-Capryllactam und 12-Laurinlactam ableiten. Die entsprechenden Lactame werden z.B. von H. Dachs, Angew. Chemie 74 (1962), 540-45 beschrieben.

Ein besonders bevorzugtes Beispiel für ein Monomeres ($b_3$) ist N-(Meth)acryloy-ε-Caprolactam

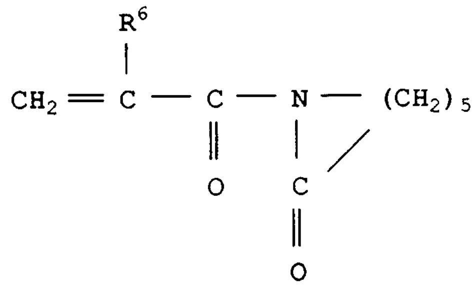

wobei $R^6$ ein Wasserstoffatom oder eine Methylgruppe ist.

Bevorzugte Monomere ($b_3$) sind Glycidylester der Acrylsäure und Methacrylsäure, Maleinsäureanhydrid, tert.-Butylacrylat, Fumarsäure und Maleinsäure.

Vorzugsweise wird die Pfropfhülle in Emulsion oder in Lösung hergestellt, wie dies z.B. in der DE-PS 1 260 135, DE-OS 32 27 555, und der DE-OS 34 14 118 beschrieben ist. Bei der sogenannten Lösungspolymerisation wird die Pfropfgrundlage in einer Lösung der Pfropfmonomeren für die Pfropfauflage gelöst, wonach diese polymerisiert werden. Die Verfahrensbedingungen sind der Encyclopedia of Polymer Science and Engineering, Band 1, Seiten 406 - 408 zu entnehmen.

Je nach den gewählten Bedingungen entsteht bei der Pfropfmischpolymerisation ein bestimmter Anteil an freien Copolymerisaten der Monomeren ($b_1$) bis ($b_3$).

Das Pfropfpolymerisat ((a) + (b)) weist im allgemeinen eine mittlere Teilchengröße von 0,05 bis 10 µm, im besonderen von 0,08 bis 0,8 µm ($d_{50}$-Gewichtsmittelwert) auf. Die Bedingungen bei der Herstellung des Elastomeren (a) und bei der Pfropfung werden daher vorzugsweise so gewählt, daß Teilchengrößen in diesem Bereich resultieren. Maßnahmen hierzu sind bekannt und z.B. in der DE-PS 1 260 135, der DE-AS 24 27 960 und der DE-OS 28 26 925 sowie in Journal of Applied Polymer Science, Vol. 9 (1965), S. 2929 bis 2938 beschrieben. Die Teilchenvergrößerung des Latex des Elastomeren kann z.B. mittels Agglomeration bewerkstelligt werden.

Zum Pfropfpolymerisat (II/1), zählen im Rahmen dieser Erfindung auch die bei der Pfropfmischpolymerisation zur Herstellung der Komponente (b) entstehenden freien, nicht gepfropften Homo- und Copolymerisate.

Auch Mischungen verschiedener Pfropfpolymerisate (II/1) können eingesetzt werden.

Nachstehend seien einige bevorzugte Pfropfpolymerisate (II/1) angeführt:

(II/1.1) 60 Gern. -% Pfropfgrundlage (a) aus

($a_1$) 98 Gern. -% n-Butylacrylat und

($a_2$) 2 Gew.-% Dihydrodicyclopentadienylacrylat und 40 Gew.-% Pfropfhülle (b) aus

($b_1$) 71 Gew. -% Styrol und
($b_2$) 24 Gew. -% Acrylnitril
($b_3$) 5 Gew.-% Glycidylmethacrylat

(II/1.2) Pfropfgrundlage wie bei (II/1.1) mit 5 Gew. -% einer ersten Pfropfhülle aus Styrol und 35 Gew. -% einer zweiten Pfropfstufe aus
($b_1$) 75 Gew. -% Styrol und
($b_2$) 25 Gew.-% Acrylnitril

(II/1.3) Pfropfgrundlage wie bei (II/1.1) mit 13 Gern. -% einer ersten Pfropfstufe aus Styrol und 27 Gern. -% einer zweiten Pfropfstufe aus Styrol und Acrylnitril im Gernichtsverhältnis 72:28

(II/1.4) Pfropfgrundlage wie bei (II/1.1) mit 40 Gern. -% einer Pfropfhülle aus Styrol und Acrylnitril im Gernichtsverhältnis 75:25

(II/1.5) Pfropfgrundlage wie bei (II/1.5) mit 40 Gew.-% einer Pfropfhülle aus 100 Gew. -% Methylmethacrylat

(II/1.6) 60 Gew.-% Pfropfgrundlage (a) aus
($a_3$) 99 Gew.-% Butadien-1,3 und
($a_5$) 1 Gew.-% t-Dodecylmercaptan und 40 Gew.-% Pfropfhülle (b) aus
($b_1$) 70 Gew.-% Styrol und
($b_2$) 30 Gew.-% Acrylnitril

Es können auch Mischungen verschiedener Pfropfpolymerisate (II/1) verwendet werden.

Neben den Pfropfpolymerisaten (II/1) kommen auch Copolymerisate (II/2) als schlagzähmodifizierende Komponente (II) in Betracht. Diese Copolymerisate (II/2) sind aufgebaut aus

($\alpha_1$) 50 bis 90, vorzugsweise 55 bis 90 und insbesondere 65 bis 80 Gew.-% Styrol und/oder substituierten Styrolen und

($\alpha_2$) 10 bis 50, vorzugsweise 10 bis 45 und insbesondere 20 bis 35 Gew.-% Acrylnitril und/oder Methacrylnitril,

($\alpha_3$) 0 bis 30, vorzugsweise bis zu 20 Gew.-% eines polymerisierbaren Monomeren mit Carboxyl-, Carboxylderivat-, Hydroxyl- oder Epoxygruppen, oder

($\alpha_4$) 30 bis 100, vorzugsweise mehr als 60 Gew.-% Methylmethacrylat

($\alpha_5$) 0 bis 70, vorzugsweise bis zu 50 Gew.-% Styrol oder substituierten Styrolen oder deren Mischungen

($\alpha_6$) 0 bis 50, vorzugsweise bis zu 30 Gew.-% Acrylnitril oder Methacrylnitril oder deren Mischungen

($\alpha_7$) 0 bis 30, vorzugsweise bis zu 20 Gew.-% eines polymerisierbaren Monomeren mit Carboxyl-, Carboxylderivat-, Hydroxyl- oder Epoxygruppen.

Bei den Copolymerisaten (II/2) gilt hinsichtlich der Monomeren ($\alpha_3$) bzw. ($\alpha_7$) das vorstehend für die Komponenten ($b_3$) Gesagte, worauf hier zur Vermeidung von Wiederholungen verwiesen wird.

Derartige Produkte (II/2) können z.B. nach dem in den DE-AS 10 01 001 beschriebenen Verfahren hergestellt werden. Auch im Handel sind solche Polymere erhältlich. Vorzugsweise liegt der durch Lichtstreuung bestimmte Gewichtmittelwert des Molekulargewichts im Bereich von 50.000 bis 500.000, insbesondere von 100.000 bis 250.000.

Auch Mischungen verschiedener Polymerisate (II/2) können eingesetzt werden.

Die Komponente (II) kann entweder ein Pfropfpolymerisat (II/1) oder ein Copolymerisat (II/2) oder aber auch Mischungen aus Pfropfpolymerisat (II/1) und Copolymerisat (II/2) enthalten. Bevorzugt werden Mischungen aus (II/1) und (II/2), wobei das Verhältnis von (II/1):(II/2) in weiten Bereichen variiert werden kann. Als besonders geeignet hat es sich erwiesen, wenn als Komponente (II) Mischungen eingesetzt werden, die zu gleichen Teilen aus Pfropfpolymerisat (II/1) und Polymerisat (II/2) bestehen.

Die Polyesterformmassen können bis zu 50 Gew.-%, vorzugsweise 10 bis 50 Gew.-%, bezogen auf das Gesamtgewicht der Polyesterformmassen an faser- oder teilchenförmigen Füllstoffen oder Verstärkungsmitteln oder Mischungen solcher Materialien enthalten (Komponente (III)).

Als faserförmige Füllstoffe seien hier nur beispielsweise Glasfasern, Kohlenstoff-Fasern, Aramid-Fasern, Kaliumtitanatfasern und faserförmige Silikate wie Wollastonit genannt. Besonders bevorzugt werden Glasfasern verwendet.

Bei der Verwendung von Kohlenstoff- oder Glasfasern können diese zur besseren Verträglichkeit mit der Komponente (I) mit einer Schlichte und einem Haftvermittler ausgerüstet sein.

Im allgemeinen haben die verwendeten Glasfasern einen Durchmesser im Bereich von 5 bis 200 $\mu$m, vorzugsweise 8 bis 50 $\mu$m. Da sich beim Verarbeiten die mittlere Faserlänge der Glasfasern verkürzt, kann die Einarbeitung der Glasfasern sowohl in Form von Endlossträngen (Rovings) als auch Schnittglasfasern mit einer Länge von ca. 1 bis 10 mm oder in Form von Kurzglasfasern mit einer Länge von etwa 0,05 bis 1,5 mm erfolgen. Nach der Verarbeitung ist eine mittlere Faserlänge von 0,1 bis 0,5 mm optimal.

Als teilchenförmige Füllstoffe seien hier nur stellvertretend Glaskugeln, Quarzmehl, Kaolin, Bornitrid, Calciumcarbonat und Siliciumnitrid genannt.

Daneben kommen auch Füllstoffe wie Glasfasergewebe oder Glasfasermatten in Betracht.

Die Polyesterformmassen können weiterhin Flammschutzmittel in Mengen von 0 bis 30, vorzugsweise 5 bis 20 Gew.-%, bezogen auf das Gesamtgewicht der Formmassen enthalten (Komponente IV).

Es kommen alle bekannten Flammschutzmittel in Betracht, wie Polyhalogendiphenyl, Polyhalogendiphenylether, Polyhalogenphthalsäure und ihre Derivate, Polyhalogenoligo- und -polycarbonate, wobei die entsprechenden Bromverbindungen besonders wirksam sind.

Beispiele hierfür sind Polymere des 2,6,2',6'-Tetrabrombisphenols A der Tetrabromphthalsäure, des 2,6-Dibromphenols und 2,4,6-Tribromphenols und deren Derivate.

Weitere halogenhaltige Flammschutzmittel sind Tetrabrombenzol, Hexachlorbenzol und Hexabrombenzol sowie halogenierte Polystyrole und Polyphenylenether. Auch die in der DE-A-19 46 926 beschriebenen halogenierten Phthalimide können verwendet werden. Von diesen hat insbesondere N,N'-Ethylenbistetrabromphthalimid Bedeutung erlangt.

Bevorzugtes Flammschutzmittel (IV) ist elementarer roter Phosphor. In der Regel kann der elementare Phosphors mit z.B. Polyurethanen oder anderen Aminoplasten phlegmatisiert oder gecoatet werden. Außerdem sind Konzentrate von rotem Phosphor z.B. in einem Polyamid, Elastomeren oder Polyolefin geeignet.

Weitere Phosphorverbindungen sind Organophosphorverbindungen wie Phosphonate, Phosphinate, Phosphonate, Phosphinite, Phosphinoxide, Phosphine, Phosphite oder Phosphate sind ebenfalls bevorzugt. Als Beispiel sei Triphenylphosphinoxid genannt. Dieses kann allein oder vermischt mit Hexabrombenzol oder einem chlorierten Biphenyl oder rotem Phosphor und, wahlweise, Antimonoxid verwendet werden.

Typisch für die bevorzugten Phosphorverbindungen, die gemäß in der vorliegenden Erfindung verwendet werden können, sind solche der folgenden allgemeinen Formel

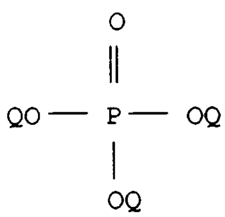

worin Q für Wasserstoff oder für gleiche oder verschiedene Kohlenwasserstoffreste oder Halogenkohlenwasserstoffreste, wie Alkyl, Cycloalkyl, Aryl, alkylsubstituiertes Aryl und arylsubstituiertes Alkyl steht, vorausgesetzt, daß mindestens einer der für Q stehenden Reste ein Arylrest ist. Beispiele solcher geeigneter Phosphate sind z.B. die folgenden: Phenylbisdodecylphosphat, Phenylbisneopentylphosphat, Phenylethylenhydrogenphosphat, Phenyl-bis-(3,5,5'-trimethylhexylphosphat), Ethyldiphenylphosphat, 2-Ethylhexyldi(p-tolyl)phosphat, Diphenylhydrogenphosphat, Bis-(2-ethylhexyl)phenylphosphat, Tri(nonylphenyl) phosphat, Phenylmethylhydrogenphosphat, Di(dodecyl)-p-tolylphosphat, Tricresylphosphat, Triphenylphosphat, Dibutylphenylphosphat und Diphenylhydrogenphosphat. Die bevorzugten Phosphate sind solche, bei denen jedes Q Aryl ist. Das am meisten bevorzugte Phosphat ist Triphenylphosphat. Weiter ist die Kombination von Triphenylphosphat mit Hexabrombenzol und Antimontrioxid bevorzugt.

Als Flammschutzmittel sind auch solche Verbindungen geeignet, die Phosphor-Stickstoff-Bindungen enthalten, wie Phosphonnitrilchlorid, Phosphorsäureesteramide, Phosphorsäureesteramine, Phosphorsäureamide, Phosphonsäureamide, Phosphinsäureamide, Tris(Aziridinyl)-phosphinoxid oder Tetrakis-(hydroxymethyl)phosphoniumchlorid. Diese entflammungshemmenden Additive sind größtenteils im Handel erhältlich.

Eine weitere Komponente (Komponente V), die in den Polyesterformmassen in 0 bis 20 Gew.-%, vorzugsweise 0 bis 15 Gew.-%, bezogen auf das Gesamtgewicht der Polyesterformmassen, enthalten sein kann, sind Stabilisatoren; die die Zersetzung des roten Phosphors in Gegenwart von Feuchtigkeit und Luftsauerstoff verhindern. Als Beispiele dieser Synergisten seien Verbindungen des Cadmiums, Zinks, Aluminiums, Silbers, Eisens, Kupfers, Antimons, Zinns, Magnesiums, Mangans, Vanadiums, Bors und Aluminiums genannt. Besonders geeignete Verbindungen sind z.B. Oxide der genannten Metalle, ferner Carbonate oder Oxicarbonate, Hydroxide sowie Salze organischer oder anorganischer Säuren wie Acetate oder Phosphate bzw. Hydrogenphosphate und Sulfate.

Neben den wesentlichen Komponenten können die Polyesterformmassen Zusatzstoffe und Verarbeitungshilfsmittel (Komponente VI) enthalten. Deren Anteil beträgt im allgemeinen bis zu 5 Gew.-%, vorzugsweise bis zu 2 Gew.-%, bezogen auf das Gesamtgewicht der Formmassen.

Zusatzstoffe, die üblicherweise verwendet werden sind z.B. Oxidationsverzögerer, Wärmestaoilisatoren, Mittel gegen die Zersetzung durch Licht, Färbemittel, Farbstoffe, Pigmente, Weichmacher, Gleit- und Entformungsmittel.

Oxidationsverzögerer und Wärmestabilisatoren, die den thermoplastischen Massen zugesetzt werden können, sind z.B. Halogenide, von Metallen der Gruppe I des Periodensystems, z.B. Natrium-, Kalium-, LithiumHalogenide, ggf. in Verbindung mit Kupfer-(I)-Halogeniden, z.B. Chloriden, Bromiden oder Iodiden. Weiterhin können Zinkfluorid und Zinkchlorid verwendet werden. Ferner sind sterisch gehinderte Phenole, Hydrochinone, substituierte Vertreter dieser Gruppe und Mischungen dieser Verbindungen, vorzugsweise in Konzentrationen bis zu 1 Gew.-%, bezogen auf das Gewicht der Polyesterformmassen, einsetzbar.

Beispiele für UV-Stabilisatoren sind verschieden substituierte Resorcine, Salicylate, Benzotriazole, Benzophenone, und auch sterisch gehinderte Amine, sogenannte HALS (s. z.B. Gächter/Müller, Plastics Additives 3rd Ed. Hans Publishers, Munich, Seite 208 f), die im allgemeinen in Mengen bis zu 2 Gew.-% eingesetzt werden.

Gleit- und Entformungsmittel, die in der Regel in Mengen bis zu 2 Gew.-% den Polyesterformmassen zugesetzt werden, sind Stearinsäure, bzw. deren Salze Stearylalkohol, Stearinsäurealkylester und -amide sowie Ester des Pentaerythrits mit langkettigen Fettsäuren.

Die Polyesterformmassen können nach an sich bekannten Verfahren hergestellt werden, indem man die Ausgangskomponenten in üblichen Mischvorrichtungen wie Schneckenextrudern, vorzugsweise Zweischnekkenextrudern, Brabender-Mühlen oder Banbury-Mühlen sowie Knetern mischt und anschließend extrudiert. Nach der Extrusion wird das Extrudat abgekühlt und zerkleinert.

Um möglichst homogene Polyesterformmassen zu erhalten, ist eine intensive Durchmischung notwendig. Dazu sind im allgemeinen mittlere Mischzeiten von 1 bis 5 Minuten bei Temperaturen von 240 bis 300 °C erforderlich. Die Abmischreihenfolge der Komponenten kann variiert werden, so können zwei oder falls gewünscht drei Komponenten vorgemischt werden, es können aber auch alle Komponenten gemeinsam gemischt werden.

Aus den so erhaltenen Polyesterformmassen lassen sich Formkörper oder flächige Gebilde wie Fasern oder Folien herstellen. Die Formkörper können blockartig sein oder Hohlkörper mit verschiedenen Wandstärken. Zur Herstellung der Formkörper und flächigen Gebilde können z.B. bekannte Verfahren wie Aufraklen, Gießen, Walzen oder vorzugsweise Spritzgießen angewandt werden.

Anschließend werden die Formkörper oder flächigen Gebilde erfindungsgemäß Beta-, Gamma-, Elektronen- oder Röntgenstrahlung ausgesetzt, wobei sie aushärten. UV-Strahlung ist aufgrund ihrer geringen Eindringtiefe in die teilkristallinen und daher nicht transparenten Formkörper ungeeignet. Bevorzugt werden Elektronenstrahlen von 20 bis 200, insbesondere 50 bis 100 kGray verwendet. Die Elektronenstrahlen können beispielsweise mittels van der Graaf-Generatoren mit Strahlungsenergien von 300 bis 3000, bevorzugt 800 bis 2000 keV erzeugt werden, wobei die Energie umso höher gewählt wird, je größer die erforderliche Eindringtiefe in das Formteil ist.

Die Gesamtbestrahlungszeit liegt zwischen etwa 1 und etwa 60 s, bevorzugt 5 bis 30 s. Die Formkörper oder flächigen Gebilde können dabei ununterbrochen bestrahlt oder mehrmals für kürzere Zeit bestrahlt werden bis die gewünschte Gesamtbestrahlungszeit erreicht ist. Mit Elektronenstrahlen können üblicherweise Teile bis zu einer Dicke von etwa 20 cm, bevorzugt 10 cm ausgehärtet werden. Dies entspricht bei beidseitiger Bestrahlung einer Eindringtiefe von ca. 10 bzw. ca. 5 cm.

Es ist auch möglich, die Formkörper oder flächigen Gebilde, Gammastrahlung auszusetzen, die von radioaktiven Nukliden erzeugt werden. Mit Gammastrahlen werden Eindringtiefen von mehreren Metern erreicht, so daß die Dicke der zu vernetzenden Teile praktisch keiner Einschränkung unterliegt. Die Bestrahlungszeiten bei Gammstrahlung liegen zwischen etwa 0,1 bis ca. 100 Stunden, bevorzugt von ca. 1 bis ca. 20 Stunden.

Im allgemeinen werden dabei 20 bis 80 % der ursprünglich in Formmassen enthaltenen olefinischen Doppelbindungen vernetzt. Der Vernetzungsgrad kann jedoch auch 20 bis 95 % betragen.

Die erfindungsgemäßen Formkörper und flächigen Gebilde zeichnen sich insbesondere durch sehr gute Wärmeformbeständigkeit aus. Formkörper, Fasern oder Folien, die nach dem erfindungsgemäßen Verfahren hergestellt wurden, eignen sich daher insbesondere für Einsatzbereiche in denen sie hohen thermischen Belastungen genügen sollen, so z.B. auf dem Elektro-Elektronikgebiet.

Beispiele

Herstellung der Polyesterformmassen

Aus den Monomeren, die der Tabelle 1 zu entnehmen sind, wurde in den angegebenen Mengen eine Mischung hergestellt. Diese wurde unter Stickstoffatmosphäre bei 160 bis 230 °C zur Reaktion gebracht. Das entstehende Methanol wurde abdestilliert. Anschließend wurde überschüssiges 1,4-Butandiol bei einer Temperatur von 260 °C im Vakuum entfernt. Nach Abkühlen auf 230 °C wurde das flüssige Vorpolymerisat kondensiert, wobei der Druck von 1013 mbar innerhalb von 40 Minuten auf 0,2 mbar reduziert wurde. Gleichzeitig wurde die Temperatur gleichmäßig von 230 auf 250 °C erhöht.

Bei der Nachkondensation wurde das Produkt 25 Minuten bei 0,2 bis 0,5 mbar einer Temperatur von 255 °C ausgesetzt. Danach wurde das warme flüssige Produkt aus dem Reaktionsgefäß entfernt und unter Verfestigung abgekühlt.

Die so erhaltenen Polyesterformmassen waren weiß. Ihre Schmelzviskositäten wurden bei 25 °C in einer 50:50-Mischung aus o-Dichlorbenzol und Phenol gemessen und sind der Tabelle 1 zu entnehmen.

Herstellung der Formkörper

Die Monomeren wurden in den in der Tabelle angegebenen Gewichtsteilen mittels eines Zweiwellenextruders bei einer Temperatur von 240 °C im geschmolzenen Zustand miteinander vermischt. Die ausgetragenen Stränge wurden in einem Wasserbad gekühlt und granuliert. Aus dem getrockneten Granulat wurden im Spritzgußverfahren die für die unten aufgeführten Prüfungen benötigten Formkörper gespritzt. Dabei betrug die Kunststofftemperatur 260 °C und die Formtemperatur 60 °C.

Bestrahlung der Formkörper 1 bis 6

Die Probekörper (80 x 10 x 3 mm) wurden einseitig mit einer Strahlendosis von 100 kGray, erzeugt mit einem Van der Graaf-Generator mit einer Beschleunigungsspannung von 3 MV, bestrahlt. Die Probekörper wurden jeweils dreimal je 10 s lang bestrahlt, wobei zwischen den Bestrahlungsdurchgängen jeweils 5 min lagen. Die Bestrahlung wurde bei Raumtemperatur durchgeführt. Während der Bestrahlung erwärmten sich die Probekörper auf etwa 60 °C.

Anwendungstechnische Prüfungen

Die Erweichungstemperatur erfindungsgemäßer Formmassen wurde nach Vicat VST, Prüfmethode B (DIN 53 460) bestimmt. Dazu wurden Probekörper (10 x 10 x 3 mm) in einem Ölbad mit einer Geschwindigkeit von 50 k/h erwärmt und mit einer Nadel (Durchmesser 1 $mm^2$) mit 9,8 N belastet. Es wurde diejenige Temperatur bestimmt, bei der die Eindringtiefe der Nadel 1 mm betrug.

Die Wärmeformbeständigkeit erfindungsgemäßer Formkörper wurde nach ISO/R 75 (DIN 53 461) sowohl nach Prüfmethode A als auch B bestimmt. Dazu wurden Probekörper (80 x 10 x 4 mm) mit 1,85 bzw. 0,46 $N/mm^2$ belastet und in einem Ölbad mit einer Geschwindigkeit von 2 K/min erwärmt. Es wurde die Temperatur gemessen, bei der die Durchbiegung 0,32 mm betrug.

Tabelle 1

| | eingesetzte Menge an Monomeren [Mol] in den Polyesterformmassen | | | | | | |
|---|---|---|---|---|---|---|---|
| | zum Vergleich | | erfindungsgemäß | | | | |
| Monomere | V1 | V2 | 1 | 2 | 3 | 4 | 5 |
| 3-Hexen-1,6-diol | - | 0,2 | - | - | - | - | - |
| 4-Octen-1,8-dicarbonsäuredimethylester | - | - | 0,2 | - | - | - | - |
| 1,4-Butandiol | 2,0 | 1,8 | 2,0 | 2,0 | 1,95 | 1,9 | 1,8 |
| Dimethylterephthalat | 1,0 | 1,0 | 0,8 | 0,8 | 1,0 | 1,0 | 1,0 |
| 10-Eicosen-1,20-dicarbonsäuredimethylester | - | - | - | 0,2 | - | - | - |
| 10-Eicosen-1,20-diol | - | - | - | - | 0,05 | 0,1 | 0,2 |
| Lösungsviskosität der Polyesterformmassen [ml/g] | 119 | 121 | 120 | 123 | 117 | 127 | 12,3 |

Tabelle 2

| Anwendungstechnische Prüfungen | Formkörper zum Vergleich V1 | V2 | erfindungsgemäß 1 | 2 | 3 | 4 | 5 |
|---|---|---|---|---|---|---|---|
| Vicat VST/B (°C) vor Bestrahlung | 180 | 170 | 175 | 178 | 178 | 177 | 175 |
| nach Bestrahlung | 180 | 183 | 191 | 196 | 189 | 190 | 193 |
| ISO 75/B (°C) vor Bestrahlung | 165 | 158 | 155 | 161 | 163 | 160 | 153 |
| nach Bestrahlung | 165 | 169 | 178 | 182 | 172 | 174 | 178 |
| ISO 75/A (°C) vor Bestrahlung | 63 | 60 | 55 | 58 | 61 | 59 | 58 |
| nach Bestrahlung | 63 | 65 | 69 | 73 | 65 | 67 | 71 |
| Gel-Gehalt (%) (o-Dichlorbenzol/Phenol 50:50) vor Bestrahlung | 0 | 0 | 0 | 0 | 0 | 0 | 0 |
| nach Bestrahlung | 0 | 25 | 27 | 33 | 10 | 25 | 36 |

## Patentansprüche

1. Formkörper oder flächige Gebilde, die dadurch erhältlich sind, daß man Polyesterformmassen, enthaltend als wesentliche Komponenten

I) 40 bis 100 Gew.-%, bezogen auf das Gesamtgewicht der Polyesterformmassen,

A) eines teilkristallinen Polyesters mit einem Kristallisationsgrad ≧ 10 % (Polyester A) auf der Basis von

$A_1$) 1 bis 40 Gew.-%, bezogen auf das Gesamtgewicht des Polyesters (A), mindestens eines Monomeren, welches mindestens eine olefinische Doppelbindung in der Hauptkette enthält (Monomeres $A_1$) ausgewählt aus der Gruppe der olefinisch ungesättigten polyesterbildenden Diole, Dicarbonsäuren und Dicarbonsäurederivate, wobei die olefinische Doppelbindungen nicht konjugiert zu den Carboxylgruppen stehen

und

$A_2$) 60 bis 99 Gew.-%, bezogen auf das Gesamtgewicht des Polyesters (A), mindestens eines Monomeren, welches keine olefinischen Doppelbindungen enthält (Monomeres $A_2$), ausgewählt aus der Gruppe der polyesterbildenden Diole, Dicarbonsäuren und Dicarbonsäureester

oder

B) einer Polyestermischung mit einem Kristallinitätsgrad ≧ 10 %, enthaltend als Komponenten

$B_1$) 5 bis 40 Gew.-%, bezogen auf das Gesamtgewicht der Polyestermischung, eines olefinische Doppelbindungen enthaltenden kristallinen Polyesters (Polyester $B_1$) auf der Basis von

$B_{1.1)}$ 45 bis 100 Mol-%, bezogen auf den Polyester ($B_1$), mindestens eines Monomeren ($A_1$) und $B_{1.2)}$ 0 bis 55 Mol-%, bezogen auf den Polyester ($B_1$), mindestens eines Monomeren ($A_2$)

und

$B_2$) 60 bis 95 Gew.-%, bezogen auf das Gesamtgewicht der Polyestermischung, eines Polyesters, welcher keine olefinischen Doppelbindungen in der Hauptkette enthält (Polyester $B_2$) und auf der Umsetzung polyesterbildender Monomerer ($A_2$) basiert

und

II) 0 bis 35 Gew.-%, bezogen auf das Gesamtgewicht der Polyesterformmassen, eines schlagzähmodifizierenden Kautschuks und

III) 0 bis 50 Gew.-%, bezogen auf das Gesamtgewicht der Polyesterformmassen, Füllstoffe und/oder Verstärkungsmittel und

IV) 0 bis 30 Gew.-%, bezogen auf das Gesamtgewicht der Polyesterformmassen, eines Flammschutzmittels und

V) 0 bis 20 Gew.-%, bezogen auf das Gesamtgewicht der Polyesterformmassen, eines Synergisten und

VI) 0 bis 5 Gew.-%, bezogen auf das Gesamtgewicht der Polyesterformmassen, an Zusatzstoffen und/oder Verarbeitungshilfsmitteln

nach der Formgebung Beta-, Gamma-, Röntgen- oder Elektronenstrahlung aussetzt.

**2.** Formkörper oder flächige Gebilde nach Anspruch 1, in denen der Kristallinitätsgrad des Polyesters (A) und der der Polyestermischung (B) jeweils mindestens 25 % beträgt.

**3.** Formkörper oder flächige Gebilde nach Anspruch 1 oder 2, in denen die Monomere ($A_1$) ausgewählt sind aus der Gruppe 4-Octen-1,8-diol, 10-Eicosen-1,20-diol, 4-Octen-1,8-dicarbonsäure, 10-Eicosen-1,20-dicarbonsäure und 10-Eicosen-1,20-dicarbonsäuredimethylester.

**4.** Formkörper oder flächige Gebilde nach den Ansprüchen 1 bis 3, in denen die Monomere ($A_2$) ausgewählt sind aus der Gruppe Terephthalsäure, Ethylenglykol und 1,4-Butandiol.

**5.** Formkörper oder flächige Gebilde nach den Ansprüchen 1 bis 4, in denen die Polyester ($B_2$) ausgewählt sind aus der Gruppe der Polyethylenterephthalate und Polybutylenterephthalate.

**6.** Verfahren zur Herstellung von Formkörpern oder flächigen Gebilden gemäß den Ansprüchen 1 bis 5, dadurch gekennzeichnet, daß man Polyesterformmassen nach Anspruch 1 nach der Formgebung Beta-, Gamma- oder Röntgenstrahlung aussetzt.

**7.** Verwendung der Formkörper oder flächigen Gebilde nach den Ansprüchen 1 bis 5 als isolierendes Material oder zur Herstellung von Behältern oder Überzügen.